# EUROPEAN PATENT SPECIFICATION

(11) **EP 4 594 188 B1**
(45) Date of publication and mention of the grant of the patent: **30.09.2026**
(21) Application number: 23769171.2
(22) Date of filing: 11.09.2023
(51) Int. Cl.: B64F 5/60, B64G 1/24, B64G 7/00, B64G 1/10, B64G 1/28, B64G 1/32, B64G 1/36

(54) **CONTROL SYSTEM FOR AIRCRAFT OR SPACECRAFT APPARATUS**
STEUERUNGSSYSTEM FÜR EIN LUFT- ODER RAUMFAHRZEUG
SYSTÈME DE COMMANDE POUR APPAREIL D'AÉRONEF OU D'ENGIN SPATIAL

(30) Priority: 29.09.2022 GB 202214259
(43) Date of publication of application: 06.08.2025
(73) Proprietor: Iceye Oy, 02150 Espoo (FI)
(72) Inventor: LISOWSKI, Jakub, 02150 Espoo (FI)
(74) Representative: Crowell & Moring U.K. LLP
(86) International application number: PCT/EP2023/074937
(87) International publication number: WO 2024/068255

(56) References cited:
- EP-A1- 3 838 746
- WO-A1-2009/126358
- WO-A1-2011/066400
- CN-A- 105 676 671
- US-A1- 2013 199 308
- US-A1- 2016 244 187
- US-A1- 2022 127 023

## Description

The following disclosure is in the field of satellite and aerospace design.

### BACKGROUND

A satellite or an aircraft may comprise systems with controllers and actuators operating in a real-time feedback control loop. One example of such a system in a satellite is the attitude determination and control system "ADCS". The ADCS may comprise actuators operable to determine the attitude of the satellite, sensors for sensing conditions of the satellite, and software. The software may be implemented on a computer also known as the ADCS controller which may form part of the ADCS. The controller provides a platform for avionics software to be implemented.

It is desirable to test an ADCS before a satellite is launched. However, a problem with testing is that it is difficult to mimic conditions in space, such as lack of atmosphere or gravity, on Earth. This problem has been addressed to some extent by modelling the dynamic behaviour of the satellite based on knowledge of the satellite properties.

Thus, in a known method of testing a satellite prior to launch, a virtualisation process is used in which a hardware simulation unit is connected to the satellite avionics platform. The hardware simulation unit replicates the satellite on a logical level. In this way the avionics software may be tested and also operations of the whole satellite may be simulated. The hardware simulation unit may be removed prior to launch of the satellite and used in future testing operations. It has been traditional in many industries to perform simulation using a separate unit that can be removed once the tests are complete and used for another product.

The same problems with testing may occur in other spacecraft as well as in aircraft where it may be difficult or expensive to mimic the operating conditions of the craft. Further the problems are not limited to ADCS but may arise in connection with other apparatus to be operated on aircraft or spacecraft,
US 2022/127023 A1 describes a universal test port connected to the different functional sub-systems of a spacecraft, allowing the sub-systems to be tested from a single location of an assembled spacecraft. The universal test port is mounted on an external surface of the spacecraft and configured to connect to the different functional sub-systems (such as power, propulsion, and command and data handling, for example) of the assembled spacecraft, allowing for the streamlining of testing operations by electrical ground system equipment during assembly, integration, and test (AIT) operations and reducing the risk of collateral damage to spacecraft hardware during testing in AIT.
WO 2011/066400 A1 describes methods, systems, and devices for determining system/device configuration and setting a mode of operation based on the determined configuration. An air vehicle processor: (a) receives a component information set of at least one external component; (b) determine a mode of operation, by the processor having a current mode of operation setting, based on the received component information and at least one of: an initial mode of operation setting and the current mode of operation setting; (c) determines whether all of the one or more received component information sets match a configuration requirement; (d) transitions to a flight-ready status if the determination is a conjunctive match; and (e) transition to a reset status if the determination is not a conjunctive match.

### SUMMARY

This summary is provided to introduce a selection of concepts in a simplified form that are further described below in the detailed description. This summary is not intended to identify key features or essential features of the claimed subject matter, nor is it intended to be used to determine the scope of the claimed subject matter.

The present inventors realised that significant benefits could be achieved by configuring the ADCS controller to perform the simulation. This is counter to traditional approaches to simulation and testing because with the simulation facility being "built in" it is used for only one satellite and is redundant once the satellite is in orbit. Ordinarily this would be dismissed as wasteful.

In the following a satellite ADCS is described in which the controller is configured to perform the simulation. In other words, a satellite ADCS is provided comprising a controller configured to implement one or more real time processes during normal operation when the satellite is in orbit and to implement one or more simulation processes prior to launch of the satellite.

Noting that a controller of this kind may have other applications, according to the invention there is provided a control system for apparatus to be operated on aircraft or spacecraft according to claim 1.

The simulation processes may also take place in real time and may simulate any of the one or more real time processes. The control systems described here are particularly useful for simulation of processes that take place in real time and are sensed in real time. The control system as described here includes sensors that provide feedback in response to the implementation of processes. Thus a control system operates in a closed loop manner.

The term "launch", when used here to refer to aircraft, may for example be take-off.

The term "real time" when used here refers here to processes that are implemented within the order of milliseconds from being commanded.

Thus the controller is configured such that during normal operation, which may also be referred to as normal mode, an operation is commanded by the controller, the actuators actuated in response to the command and sensor signals resulting from the operation are fed back from the sensors comprised in the control system to the controller. The controller is configured to alternatively perform one or more simulation operations, i.e. to operate in simulation mode, in which an operation is commanded by the controller and one or more sensor signals resulting from a simulation of the operation are generated. The simulation may be based on a model configured in the controller so that the sensor signals resulting from the simulation are generated within the controller.

The simulation of an operation may comprise actuating one or more of the actuators. However the resulting sensor signals from the sensors comprised in the control system are not used and instead the sensor signals resulting from the simulation are used. Thus the controller may be configured such that in simulation mode the generating of the sensor signals resulting from a simulation of the operation comprises modifying or substituting signals received from the one or more sensors.

It should be noted here that whereas a feedback loop might be used to calibrate or otherwise adjust components such as actuators or to make sure components are working as and when expected, the simulation described here need not be used in this way and may be for the purpose of integration testing of the control system, for example to enable a better understanding of its behaviour, and may not lead to any modification of the system.

It is typically a requirement for satellites to use space-hardened components and this therefore can limit the choice of components to be used in a satellite. Typical space-hardened processors are multi-core processors and for some satellites this is more than is required for normal operation of the satellite post-launch. Therefore, it might be expected that this additional processing capacity might be used to enable the satellite to perform additional operations post-launch. The present inventors have taken the opposite approach, and in some implementations, this spare capacity is used for the simulation and testing pre-launch.

Therefore the control system controller may comprise a multi-core processor. Then, the controller may be configured for one or simulation processes to be implemented in one of the cores, also referred to here as the first core, and operations carried out during normal operation may be implemented in another core, also referred to here as the second core. The one and another core may be supported by different operating systems. For example, one core may be supported by a real time operating system and real time control operations may be implemented in this core. Another core may be supported by a non-real time operating system and simulation operations may be implemented in this core. Thus, the controller may be configured with a model of the satellite dynamics for use in implementing the one or more simulation processes. The second core may be configured with this model.

The second core may be used for implementation of additional processes that in the prior art would be implemented in the first, e.g., real time, core. For example, the second core may be configured to implement one or more telemetry and control handing processes of the controller.

There is also provided a satellite comprising the ADCS described here in which the controller is configured to perform simulation. The satellite may comprise a synthetic aperture radar "SAR" satellite.

In another aspect there is provided a method of testing the operation of a control system for apparatus to be operated on aircraft or spacecraft, such as for example a satellite attitude determination and control system "ADCS", wherein the control system comprises a controller configured to implement one or more real time processes during normal operation when the aircraft or spacecraft is above Earth. The method comprises configuring the controller to implement one or more simulation processes prior to launch of the air or spacecraft and implementing the one or more simulation processes prior to launch of the air or spacecraft. The aircraft or spacecraft is then launched with the controller configured in this way, albeit that no further simulation will be performed. This is particularly the case with spacecraft which are not re-used on their return to Earth.

There is also provided here a computer readable medium comprising instructions according to claim 15.

Any of the optional features of the control system, e.g., ADCS, described here may also be applicable to the method or the computer readable medium.

### BRIEF DESCRIPTION OF THE DRAWINGS

Embodiments of the invention will be described, by way of example only and with reference to the following drawings, in which:
Figure 1 is a perspective view of a satellite in which the technology described here may be incorporated;
Figure 2 is a schematic diagram showing components of a satellite ADCS;
Figure 3 is a functional block diagram of a control system for apparatus in which the controller is configured to perform simulation;
Figure 3a is a schematic diagram of an example configuration of a smart switch that may be included in the control system of figure 3;
Figure 4 illustrates a signal process flow using the functional block diagram of figure 3;
Figure 4a is a timing diagram showing an example operation of the control system of figure 3;
Figure 5 is a schematic diagram of the physical architecture of an example satellite ADCS.

Common reference numerals are used throughout the figures to indicate similar features.

### DETAILED DESCRIPTION

Embodiments of the present invention are described below by way of example only. These examples represent the best ways of putting the invention into practice that are currently known to the applicant although they are not the only ways in which this could be achieved.

The control system described with reference to the drawings is a satellite ADCS. However as noted above the same principles may be used in other control systems for apparatus to be operated onboard aircraft or spacecraft.

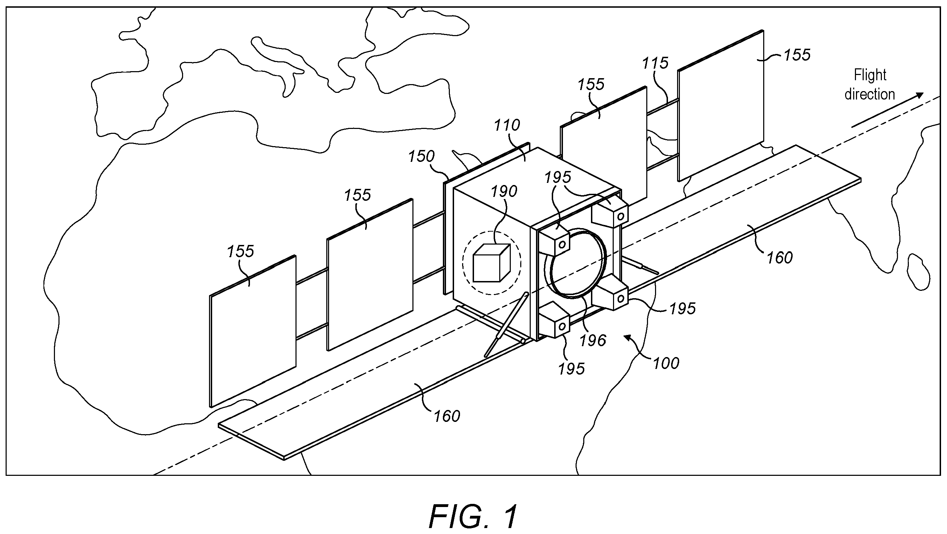

Figure 1 is a perspective view of a satellite 100. The basic components of a satellite similar to that of figure 1 are described in our earlier patent application WO2022079168A1.

The satellite comprises a body or bus 110, housing or supporting components including an ADCS 190 and a propulsion system, shown in figure 1 to comprise four thrusters 195. The body 110 is also referred to in the art as a "bus" since it may house or support bus components. Bus 110 may additionally house one or more batteries. Bus 110 may be partially enclosed, for example to house and protect components. A housing may provide surfaces on which components may be mounted. In the satellite of figure 1 an array of solar panels is provided comprising solar panel 150 mounted on one rectangular surface of the bus 110 and additional solar panels 155 attached to solar panel 150 by struts 115. The solar panels are arranged in a row with adjacent panels being pivotable with respect to each other whereby the solar panel array may be folded for transport and then deployed once in space. A radiator panel 196 is used for thermal management within the satellite.

Other components comprised in the satellite may be provided in order for the satellite to perform a mission and these are known as the "payload".

In an example the payload is an earth observation system for imaging the Earth's surface know as a synthetic aperture radar system, or SAR system.

In the example satellite 100 shown in the figures the payload comprises a radar antenna array 160. The "flight" direction of the satellite is generally parallel to the longitudinal extent of the antenna array. The radar antenna array 160 comprises antenna elements and associated electronic circuitry. The radar antenna array 160 is shown to be mounted on or adjacent to a rectangular surface of the bus 110. The radar antenna array 160 may be folded for transport on Earth and into space and unfolded when deployed, in a similar way to the solar panels.

The ADCS 190 may be configured for various operations including but not limited to rotating the satellite about an axis parallel to the direction of travel along an orbit, otherwise known as the flight direction indicated in figure 1.

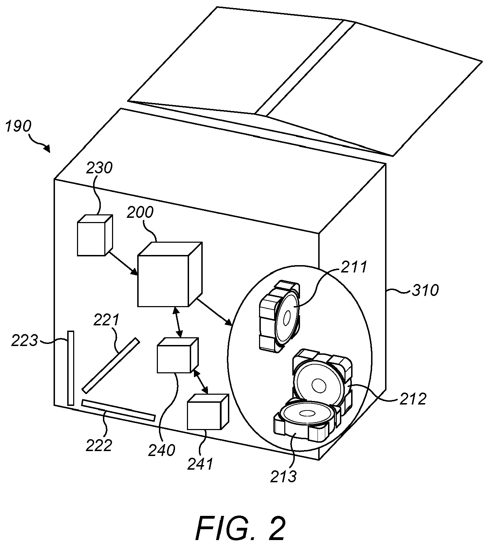

Referring now to figure 2, the ADCS 190 is usually located in the satellite body 110 and used to control the orientation of the satellite.

The ADCS 190 may be in the form of a self-contained unit comprising actuators and sensors and a controller 200. In this illustrated example the actuators comprise a set of three reaction wheels 211, 212, 213 and a set of three torque rods 221, 222, 223 which are controlled by the controller 200.

Reaction wheels are sometimes also known as momentum wheels and function by using an electric motor to spin the wheel inside the spacecraft body 110. By conservation of angular moment, spinning the wheel in one direction causes the spacecraft to rotate in the opposite direction. In this example, three reaction wheels are provided in respective orthogonal axes. In another example, four or more reaction wheels may be used in order to have better control over various aspects of the satellites' dynamics.

The ADCS unit 190 shown in Figure 2 further comprises torque rods 221, 222, 223 also known as Magnetorquers. The torque rods 221, 222, 223 are generally operated for momentum dumping or to help maintain the satellite 100 in a particular attitude.

The ADCS controller 200 comprises a computer dedicated to the ADCS 190. The controller 200 is in communication with the satellite on-board computing system, not illustrated here, which performs other functions of the satellite, for example functions associated with the satellite mission and communications to and from Earth.

The ADCS comprises sensors communicating with the controller 200 indicated schematically by box 230. The sensors may comprise any of a sensor associated with each of the actuators, for example reaction wheels 211, 212, 213 and torque rods 221, 222, 223, a sun-sensor, a magnetometer for measuring local magnetic field, and other sensors as will be known to those skilled in the art. The sensors 230 are configured to measure various quantities during the travel of the satellite. The ADCS controller 200 is further in communication with a GPS receiver 240 and associated GPS antenna 241. The GPS receiver module may be a commercial off-the-shelf GPS receiver.

To properly control the satellite 100 travelling in orbit around Earth, the ADCS controller 200 needs to know the satellite's true position as precisely as possible. For this purpose, the ADCS controller 200 further runs orbit propagation software, which is also referred to as an (internal) orbit propagator. In general an orbit determination control system "ODCS" may be integrated or otherwise provided with an ADCS. In principle the operation of an ODCS may be simulated in the same manner as the ADCS. In general instances where an ODCS is operated in real time so as to benefit from this are rare.

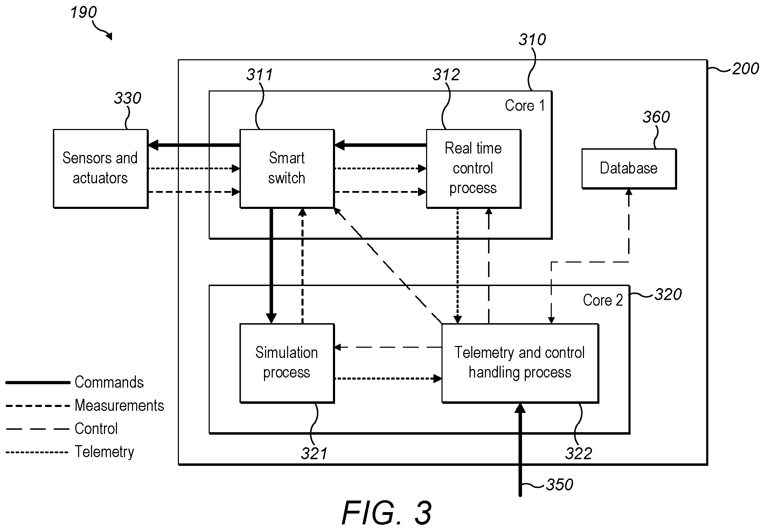

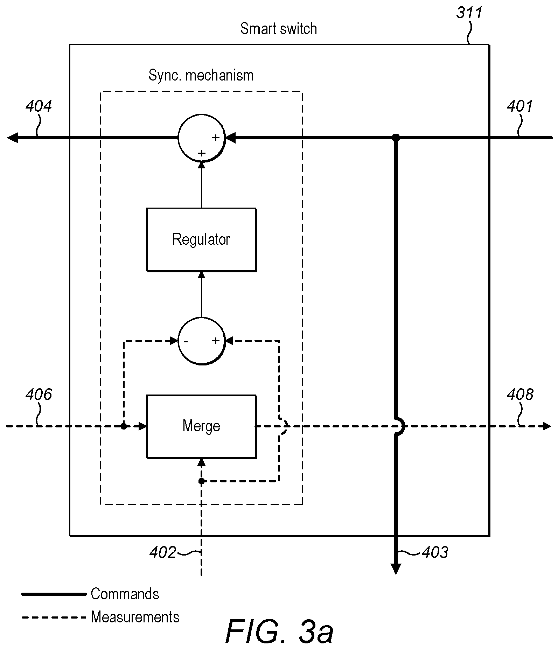

Figure 3 is a functional block diagram of a satellite ADCS 190 in which the controller 200 is configured to perform the simulation.

The controller 200 of figure 3 comprises a multi-core processor comprising a first core 310 and a second core 320. A number of software operations are implemented in the first core and second cores 310, 320, shown in figure 3 as respective modules. Operations implemented in the first core 310 include a smart switch 311 and real time control processes indicated as module 312. Operations implemented in the second core 320 including simulation processes indicated as module 321 and telemetry and control handling processes indicated as module 322. Each module may comprise one or more sub-modules, for example for implementation of different processes within each module.

Telemetry and control handling may comprise applications whose objective is to collect and store telemetry data and to provide an interface with external systems, not shown, for example outside the satellite. The telemetry and control handling processes may handle commands 350 from external systems such as for example a command to change mode, which may result in a control signal to the real time control process module 312.

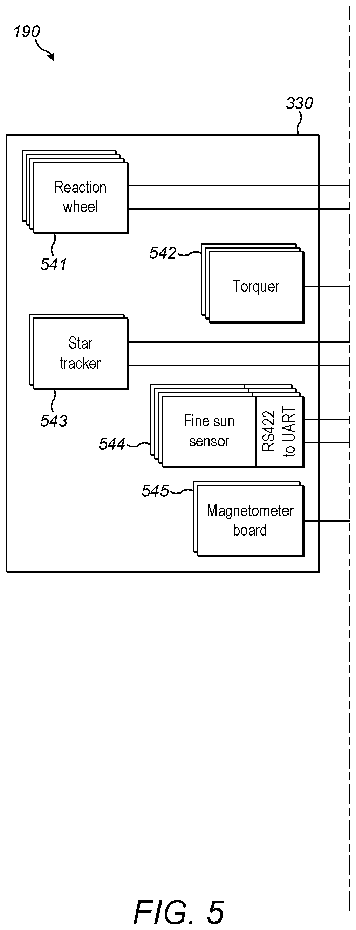

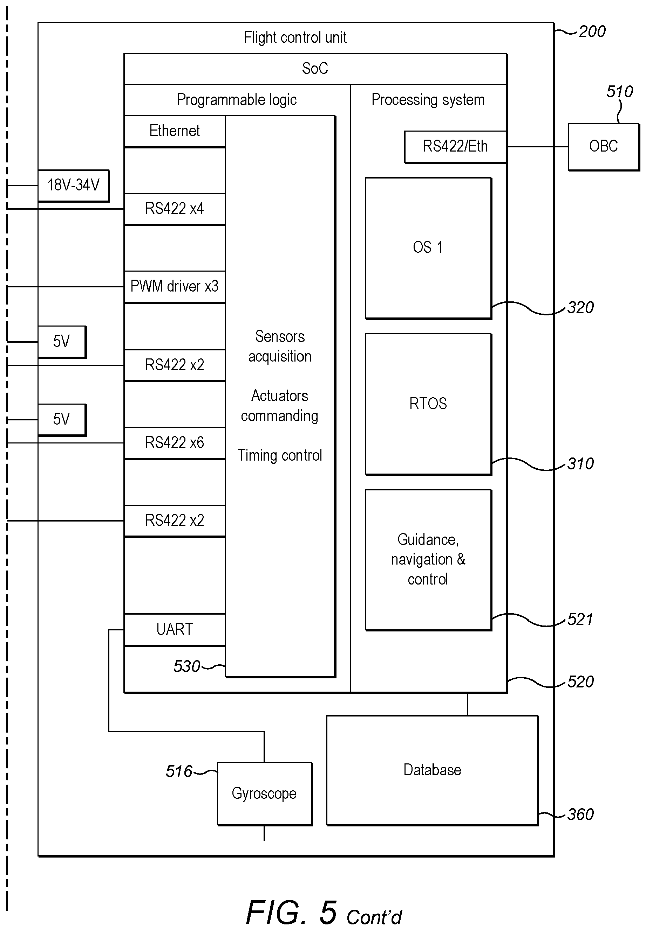

Also shown in figure 3 are sensors and actuators, represented by block 330, for example but not limited to sensors 230 and reaction wheels 211, 212, 213 as described in connection with figure 2 and reaction wheels and additional sensors as described in connection with figure 5. Sensors or actuators 330 may comprise any of reaction wheels, torque rods and other devices some of which may have associated sensors. Some actuators may not have associated sensors and some sensors may not have associated actuators. For example some sensors may sense ambient conditions, or sense conditions of apparatus associated with the satellite such as a start rocket during launch. The sensors and actuators 330 are peripheral from the standpoint of the controller 200 and the ADCS may comprise other peripheral components that behave in the same way as sensors and actuators. Other examples of commands 350 that may be received and handled by the telemetry and control handling process module 322 include but are not limited to commands to enable or disable one or more actuators.

The use of real time and non real time cores opens up the possibility for parallel processing of data and optimisation of processes according to their requirements. Telemetry and control handling is an example of processing that does not require real time operation and can therefore be implemented in the non real time core in parallel with real time operations. Although the time constraints on telemetry and control handling are not as rigid as for the real-time systems, they still need to be completed within a reasonable amount of time. Notably the telemetry and control handling is not only used for simulation but also after launch. The simulation processes take place only before launch.

A benefit of running simulation processes in the non real time core 320 is that they do not take time or consume resources from the real time core 310.The simulation processes can run in parallel with the real time operations.

It will be appreciated that the sensors and actuators 330 may comprise hardware components. As noted above, the smart switch 311, real time control process module 312, simulation process module 321 and telemetry and control handling process module 322, described further below, may be implemented in software. For example, a part of the respective core 310 or 320 may be programmed with suitable algorithms to implement the respective processes. Thus the modules of figure 3 may be regarded as "applications" or software components.

Signals transmitted between blocks in figure 3 include commands, measurements, control and telemetry.

The term "command signal" is used here to refer to signals that are sent to, e.g. consumed by, the actuators. These are usually but not exclusively real time signals that send information to actuators, for example an acceleration command to a reaction wheel. Command signals to actuators can be varied according to feedback from the sensors (real or simulated) and as such can operate in a closed-loop manner. The term "control signal" is used here to refer to signals that are received by the modules, for example to control behaviours of modules e.g. start/stop simulation.

The term "measurements" is used here to refer to information consumed by real time process in real time in order to make a decision regarding a command.

The term "telemetry" is used here to include information that is not consumed by the real time process. Telemetry may comprise information about the whole system and may include measurements. Telemetry may for example be transmitted to operators for the purpose of monitoring the health of a whole system. Therefore measurements as described here may be in some instances a subset of telemetry.

The actuators are operated by the controller 200. In the ADCS 190 of figure 3, the actuators are operated in response to commands issued by the telemetry and control handling process module 322, routed to the sensors and actuators 330 via the smart switch 311. The sensors output signals to the controller 200, some of which may provide feedback on the operation of the actuators. In the ADCS of figure 3, the output signals from the sensors and actuators 330 are shown to comprise measurement and telemetry signals, which are routed to the real time control process module 312 via the smart switch 311.

The first core 310 and the second core may be supported by different operating systems but this is not essential. For example, the first core 310 may be supported by a real time operating system and the second core 320 may be supported by a non-real time operating system, for example a time-sharing operating system.

A difference between real time operating systems and other operating systems is that they are configured to process data or perform operations with particular time constraints. Thus for example a real time operating system may prioritise operations or handle interrupts and pre-emption in a different manner from other operating systems. Time-sharing operating systems for example may be configured for maximum throughput.

Examples of suitable operating systems will be known to those skilled in the art. A suitable real time operating system is FreeRTOS and a suitable operating system for core 320 is Linux. Linux and possibly other operating systems may be adapted for real time operation, for example through the application of a patch, and may therefore be used as a real time operating system to support the first core 310.

In some implementations of the controller 200 both cores 310 and 320 may be supported by real time operating systems.

Additional cores may be comprised in the controller 200 and therefore the functions implemented in either the first or the second core may be shared across multiple cores. However it is desirable but not essential for the simulation process module 321 to be implemented in one or more separate cores from the real time control process module 312.

The functions of the software modules shown in figure 3 will now be described in further detail.

### Telemetry And Control Handling

Telemetry and control handling processes, for example implemented in module 322 of figure 3, may perform a number of functions including but not limited to any of commanding the operation of the actuators, collecting telemetry data such as may be contained in signals from sensors, and storing telemetry data for example prior to transmission. The functions performed by telemetry and control handling process module 322 may be limited to those which do not have real time deadlines, for example the simulation of satellite manoeuvres such as changes in attitude.

The ADCS controller 200 may include memory, some of which may be configured as a database 360 in any suitable way known to those skilled in the art. A telemetry and control handling process may write telemetry data to the database 360. Telemetry and control handling process module 322 may include one or more interfaces with actors external to the ADCS, such as the satellite on board computer, for example to allow access telemetry data by the external actor or to send commands to the external actor.

The telemetry and control process module 322 outputs control signals to the real time control process module 312, the smart switch 311 and the simulation process module 321. The telemetry and control process module 322 receives telemetry data from the real time control process module 312 and the simulation process module 321.

### Simulation

Simulation processes are used for testing the operation of the satellite, in which the ADCS 190 is installed, prior to launch. The present description uses the term "real time" to denote processes performed after launch but it will be appreciated that it is useful for simulation processes to be performed in real time.

As noted above the simulation may be performed for the purpose of integration testing of the ADCS or the whole satellite. It may provide the first opportunity for a control loop to be operated. It can be used to at least qualitatively verify proper operation of the various components of the ADCS system or of the whole satellite to various inputs and feedback conditions. It may provide also information as to how long certain processes require in order to plan for the operation of the satellite after launch. The testing may provide information on aspects of the operation of the control system that are not monitored, such as the temperature of the actuators, which can then be taken into account after launch.

Simulation processes comprise various simulation operations performed when the satellite is not in orbit including but not limited to simulation of attitude dynamics. A command 350 may be received to initiate a simulation. Simulation process module 321 receives commands from the real time control process module 312 via the smart switch 311. Examples of commands include "accelerate reaction wheels", "implement torque rod duty cycle" and others that will be familiar to those skilled in the art. Simulation process module 321 is configured with a model of the satellite dynamics and uses the model to simulate how the satellite will behave. As part of the simulation the simulation process module 321 may continuously provide information as to the general state, or health, of the satellite, for example measurement data. Thus for example simulation processes may simulate sensors to provide current attitude measurements, magnetometer outputs and other measurements such as will be known to those skilled in the art.

Measurement data is fed back from the simulation process module 321 to the smart switch 311 which sends it to the real time control process module 312. Telemetry data is fed back from the simulation process module 321 to the [sensors and] actuators via the smart switch 311. All command signals are generated from the real time control process module 312 which in normal operation are passed from the smart switch 311 to the sensors and actuators. In simulation mode these commands are also provided to the simulation process module 321. The simulation process module then also knows what commands have been sent to the actuators. There are two producers of measurement signals, the sensors and/or actuators 330 and the simulation process module 321. The smart switch 311 decides which kind of information, e.g. measurement data, is provided to the real time control process module 312. For example, the smart switch may route measurement data to the real time control process module 312 either from the sensors and/or actuators 330 or from the simulation process module 312, or it may take a combination of the measurements from the sensors and/or actuators 330 and from the simulation process module 312 and route that to the real time control process module 312.

During a simulation it is desirable for the actuators to be physically actuated. Thus, for example one or more of the reaction wheels 211, 212, 213 may be turned during a simulation operation. In general, to the extent possible, it is desirable to command and operate real hardware during a simulation, albeit that it may be possible for this to be modelled in software, since more accurate information may be obtained from actual operation of hardware.

### Real Time Control

Real time control processes control the ADCS 190 when the satellite is in orbit and in the ADCS of figure 3 are implemented in real time control process module 312.

### Smart Switch

The smart switch 311 shown in figure 3 routes signals between the sensors and actuators 330 and either the real time control process module 312 or the simulation process module 321. The operation of the ADCS in normal and simulation modes is described further below. For the moment it should be noted that during normal operation no simulation processes are implemented and the ADCS behaves as if the smart switch 311 is not present. Therefore, during normal operation commands from the real time control process module 312 are passed unmodified by the smart switch 311 to the sensors and actuators 330, and measurements and telemetry data from the sensors and actuators 330 are passed unmodified by the smart switch 311 to the real time control process module 312. Alternatively, the smart switch 330 may be bypassed during normal operation of the ADCS 190.

Thus in normal operation the smart switch 311 operates as a switch, receiving incoming signals and redirecting them to their destination.

During simulation, the smart switch 311 routes signals in a smart manner. In other words, some signals received by the smart switch 311 are modified before being redirected or onward directed to their destination, e.g., transmitted to either the sensors and actuators 330 or the simulation process module 321 or the real time control process module 312.

For example, during simulation the smart switch 311 may receive sensor signals containing data from one or more sensors. Some or all of these will not be realistic for operation of the satellite in space and therefore the smart switch 311 may substitute received signal data from one or more sensors with data derived from the model of the satellite operation in space. In some instances the received signal, e.g. measurement or telemetry data, may be fed into the model of the satellite behaviour in space in order to derive the modified signals for redirection. In other instances the modified signal may be derived entirely from the model implemented in the simulation process. The generation of the modified or substitute data may be in response to the receipt of data from sensors or actuators. Alternatively the substitute data may be generated independently, for example during simulation some or all of the sensor data may be ignored.

A specific example of received measurement data received that may be received by the smart switch 311 is start rocket potential, which will clearly be nonsensical since the satellite is not being launched and therefore the smart switch 311 may substitute a value based on the model for the purpose of the simulation.

A further or alternative purpose of the smart switch in some implementations is, during simulation, to modify commands received from the real time control process module 312 prior to onward transmission to the sensors and actuators 330 and/or the simulation process module 321.

An example configuration of the smart switch 311, to perform this modification of commands, is shown in Figure 3a.

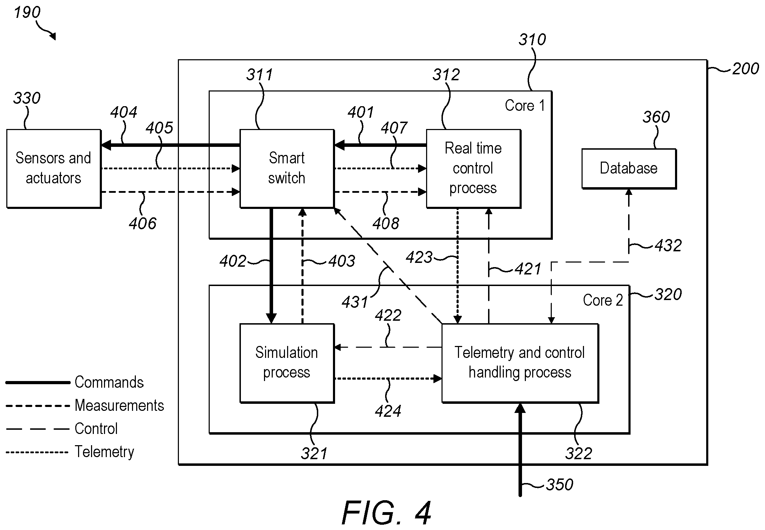

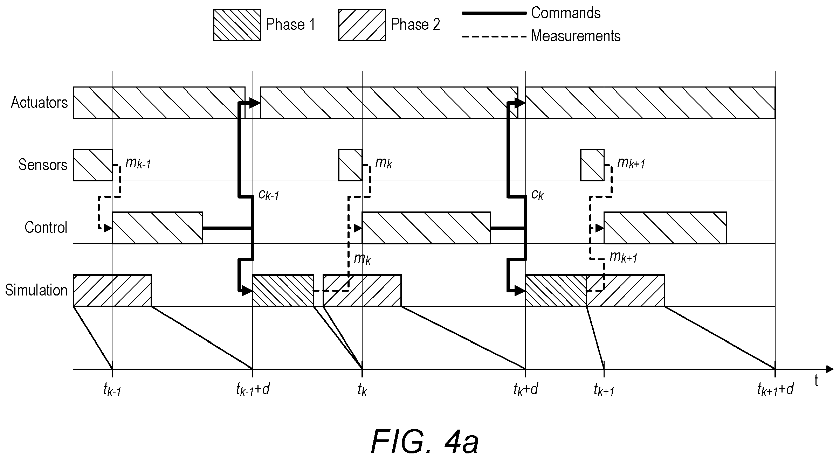

The functions of the smart switch 311 of figure 3a are to route command and measurement signals between sensors/actuators 330, simulation process module 321 and real time control process module 312. The smart switch 311 may merge synthetic measurements 402 from a simulation process with real measurements 406 from sensors by substituting those variables in the measurement signals that are to be simulated. The measurements are also sent to the real time control process via signal 408. The telemetry signals (not shown) are also passed through the smart switch 311 but are not typically modified by the smart switch. The smart switch 311 may ensure that the state of real actuators (e.g., rotational speed of reaction wheels) is consistent with their state in simulation. This is achieved in the configuration of figure 3a by incorporating a feedback regulator that takes commands 401 from the real time command process and modifies them if needed before sending the commands 404 to real actuators to keep their state in sync with the state of the simulated actuators in the simulation process. It should be noted that this synchronization mechanism is optional - it is applicable only for those actuators that carry a state from one cycle to another, as explained further with reference to figure 4a.

In a particular example, in simulation mode, a command 401 may be sent from the real time control process module 312 to both the sensors and actuators 330 and to the simulation process module 321 via signal 403 so that they both implement the command, physically by the actuators and virtually by the simulation process module 321.

An example command may be for example to apply a certain acceleration to a reaction wheel. After some time, e.g. 1 hour, of operation, the physical and the virtual reaction wheels may be rotating at different speeds. The smart switch implements a feedback loop which, based on incoming measurements from the simulation process module 321 and the sensors and/or actuators 330, computes this difference and sends a command, also referred to here as a modified command, to the simulation process and/or the sensors and/or actuators 330 to synchronise the real and the virtual reaction wheel so that they rotate at the same speed. It will be appreciated that an analogous process may take place when any command is issued from the real time control process module 312. Usually the command will be to the real operation, i.e. the actuators and/or sensors, to align the real operation with the simulation.

### Normal Operation

In normal operation the simulation process is disabled and the system behaves as if the smart switch does not exist. That is commands from the real-time control process reach peripheral devices (sensors and actuators) unchanged. Also any measurements coming from the peripherals reach the real-time control process unchanged.

### Simulation

To understand how the system operates during simulation let us consider a flow of measurement signals and command signals indicated in figure 4.

A command signal 401 to initiate a change in attitude may be generated from the real-time control process module 312 or at any other suitable point in the system depending on the precise design. A "simulation start" signal may originate from a human operator. This command may be as if the satellite was in normal operation. In other words the real time process module 312 may not be aware that a simulation is performed. The implementation of the simulation in the second core 320 means that the simulation does not interfere with any real time process. Although the second core may be designed as a non real time core, it will typically have some real time capability, sufficient to implement simulation.

In response to receiving the command signal 401 the smart switch 311 routes the command signal unmodified 402 to the simulation process module 321, since a simulation process consumes real time, or "real life" commands signals to perform a simulation, e.g. simulate an aspect of the satellite dynamics.

In response to receiving the unmodified command 402, the simulation process outputs measurement data 403 derived from the model of the satellite behaviour.

Also in response to receiving the command signal 401 the smart switch 311 routes a modified command signal 404 to the actuators. The modification is performed in order to make the state of the peripherals consistent with the simulated peripherals' state in the simulation process.

In response to the modified command signal 404 the actuators are operated, and in response to the operation of the actuators, telemetry and measurement data 405, 406 is output from the sensors to the smart switch 311.

The smart switch 311 substitutes the measurement signals 406 received from the sensors with the measurement data 403 received from the simulation process module 321 and routes these as modified measurement data 408 to the real time control process 312.

Telemetry data 405 from the sensors and/or actuators 330 is passed unmodified by the smart switch 311 to the real time control process module 312. The real time control process module 312 receives the telemetry data 407 and passes this unmodified to the telemetry and control handling process module 322.

In principle the telemetry data could be routed from the sensors and/or actuators 330 directly to the telemetry and control handling process module 322. The system is designed for the telemetry and control handling process module 322 to receive the telemetry data unmodified from both the sensors and/or actuators 330 and the simulation process module 321. Neither the smart switch 311 nor the real time control process module consume the telemetry data.

The telemetry and control handling process module 322 may perform various functions including interfacing with the rest of the satellite system and controlling the storage of data in the database. Thus the module 322 may receive commands 350 from the main computer in the satellite, which in turn receives tasking instructions uplinked from a ground station. The module 322 can then issue control signals 421, 422, and 431 to the real time control process module 312, the simulation process module 321, and the smart switch 311 respectively, and in response receive telemetry data 423 from the real time control process module 312 and telemetry data 424 from the simulation process module 321. It can then send and receive signals 432 to save and retrieve telemetry data from the database 360.

Figure 4a is a timing diagram which illustrates an example of parallel operations of the simulation and control which may be implemented in the control system.

In the example of figure 4a, the control system operates in cycles characterized with constant sample time *tₛ* (difference between consecutive *tₖ*'s). Figure 4a depicts 3 consecutive control cycles: *tₖ₋₁, tₖ,* and *tₖ₊₁.* In the diagram, boxes in the 'control' row represent execution time of the control process - time it takes for the control loop to compute command signals to the actuators cₖ using latest measurement signals *mₖ*.

In normal operation the control loop uses measurements *mₖ* from the sensors. To achieve deterministic latencies actuators are commanded with a constant delay *d* with respect to the start of the control loop. The delay is set to be greater than the worst-case execution time of the control loop, so that results *cₖ* are available for the actuators before *tₖ + d.* Actuators execute the command *cₖ* over the interval [*tₖ + d, tₖ₊₁ + d*]. Execution of a command means that the value of the commanded signal is constant over this interval. For the reaction wheels the signal can be for example acceleration or torque.

The control system may be configured to operate in cycles of the same duration in normal mode and in simulation mode.

Therefore, in order to provide a synthetic environment for the control process, to let it operate without a real plant in the loop, the simulation process needs to provide synthetic measurements *mₖ* before *k*-th control loop has started to be executed, that is before *tₖ*. To generate synthetic measurements *mₖ* the simulation process needs to integrate the equations of motion up to the time *tₖ*. To integrate equations of motion the simulation process needs to know the value of commands up to the time *tₖ*, that is it needs to know the value of *cₖ₋₁.*

Integration happens in two phases:
- In phase 1 the simulation process integrates equations of motion for the interval [*tₖ₋₁ + d, tₖ*].
- In phase 2 the simulation process integrates equations of motion for the interval [*tₖ, tₖ + d*]*.*

Therefore, the simulation process has the following timing constraints:
- Computation time for integration phase 1 cannot exceed *tₛ - d.*
- Computation time for both phases (1 + 2) cannot exceed *tₛ*.

If the simulation were to be performed in series with the control loop rather than in parallel, then the constraints would be more severe:
- Computation time for both simulation phases (1 + 2) could not exceed *tₛ - d,* or in other words total execution time of the simulation and the control processes would need to fit within *tₛ*.

Performing the simulation processes in parallel with the control loop using parallel processing has the advantage of making the time constraints in the system less severe and makes the use of a non-real time operating system for running the simulation modules more feasible.

The ADCS described with reference to figure 3 may be achieved by providing a controller comprising a multi-core processor, for example with at least two cores supported by different operating systems. The controller may then be configured to operate in the manner described here, before or after being installed in an ADCS. The configuration of the controller may comprise installing instructions comprised in a computer readable medium.

Figure 5 is a schematic diagram of an example physical architecture which may be used to implement the ADCS 190 described here. In figure 5 components are shown that may be comprised in controller 200 and sensors and actuators 330.

The controller 200 comprises a processing system 520 and programmable logic 530. The controller 200 has an output to the satellite on board computer "OBC" 510 which together with the ADCS may be housed in the satellite body 110. In principle the functions of the ADCS controller as described here may be integral with the satellite OBC 510. It will be appreciated that the OBC will require a multi-core processor if the multi-core architecture described here is implemented. However, there are practical advantages to providing the ADCS controller 200 in a separate computer from the OBC 510. In practice the OBC 510 may comprise primary and secondary computers, one being redundant except in the event of failure of the other for example. The same processor architecture may be used for the controller 200 and the OBC 510.

The controller 200 is shown to comprise a multi-core processor or processing system 520 comprising cores 310 and 320. The multi-core processing system in this example is also used to implement guidance, navigation and control functions indicated by block 521. These functions are not relevant to the control systems described here and figure 5 is not specific as to how these functions are implemented.

The programmable logic 530 may comprise a field programmable gate array "FPGA" or other configurable logic.

In a practical implementation of the ADCS shown in figure 3, actuator/drivers (small processes) send/receive commands to/from smart switch 311 and 330 in a manner known in the art. These may be implemented in programmable logic 530. These actuators and drivers may supply telemetry data 423 (figure 4) to the telemetry database 360.

One or more sensors or actuators may be provided as part of the controller 200. For example gyroscope 516 is comprised in the controller 200 of figure 5. The gyroscope 516 may in some implementations be outside the control system 200.

As shown in figure 5 the sensors and actuators 330, also referred to here as peripherals, comprise reaction wheels indicated generally as 541, torque rods 542, star trackers 543, sun sensors 544 and magnetometers 545.

As noted above the satellite 100 may comprise SAR satellite. In a SAR system the antenna array 160 is operated to transmit radar signals to the Earth and listen for the returning echoes. By recording the echoes, an image of the Earth's surface can be constructed from data including the length of time taken for the echo to return (indicating location), the amplitude of the radar return, and the phase information that is included within the radar signal. Further location information is obtained from the frequency of the returned signal which is shifted due to the Doppler effect as a result of the relative motion of the satellite to the earth.

The ADCS described here was particularly designed for small satellites for operation in low earth orbits.

In some examples, the satellite may be a micro satellite or a small satellite. The smaller size and greater agility of micro and small satellites provides several potential advantages for dry-bulk stockpile monitoring. In particular, small satellites are more agile and their orientation and orbital paths can be changed more easily in response to instructions to image a particular place on Earth and from a particular angle. In addition, smaller satellites can be significantly less expensive to manufacture and launch than traditional larger satellites. More of them can be launched for the same cost as a single larger satellite in order to form a constellation of satellites that can provide much more frequent revisit times compared to a single satellite, as described above. In some examples, the satellites can be deployed in constellations of five satellites or more, ten satellites or more, or twenty satellites or more.

In an example, satellite 100 may be a micro satellite with a mass of 100 kg. Regular satellites having a mass of approximately 1000 kg are generally more expensive and less agile than micro satellites. Satellites may be categorised according to their mass. For example, a satellite having a mass between approximately 1 kg and approximately 10 kg may be categorised as a cube satellite, a satellite having a mass between approximately 50 kg and approximately 250 kg may be categorised as a micro satellite; a satellite having a mass of approximately 500 kg may be categorised as a small satellite; and a satellite having a mass between approximately 800 kg and approximately 1200 kg may be categorised as a regular satellite.

In an example, the satellite is orbiting Earth in a low-earth orbit. A low-earth orbit can be from 160 km to 1000 km above the surface of the Earth. Examples of Earth-observation satellites based on SAR according can have orbits of between 450 km and 650 km above the Earth. In an example of satellites that would be suitable for implementing the system and methods described herein, a SAR satellite has an orbit that is 550 km above the Earth's surface. At an orbit of 550 km above the Earth, for example, the satellite is effectively traversing the ground at about 7.5 km/s, or 27,000 km/h. Most satellites in this orbit will traverse the Earth at a speed that is in the range of 7-8 km/s

The present disclosure is therefore primarily but not exclusively concerned with the design and operation of satellites with a weight below 1000 kg, e.g. below 830kg, below 500 kg e.g. below 454 kg, or below 227 kg (to allow for two satellites to be launched using one port).

Satellites in low earth orbits are normally at an altitude of less than 1000 km but could be as low as 160 km above Earth.

The principle of configuring an in-built controller to perform simulation of operation of a system is not limited to ADCS for satellites and could be extended to other systems or products. In an example, a fly-by-wire system in an aircraft that takes inputs from various sensors and actuates the control surfaces on the aircraft (e.g., wing flaps, ailerons, rudder, etc.) could also comprise a controller with a built-in simulation function in order that integration testing of the airplane can be performed through simulation while the airplane is still on the ground. Thus, in another aspect there is provided here apparatus comprising a product to be tested and a controller that is part of the product for controlling regular functioning of the product. The apparatus may be regarded as a test platform. The controller may comprise simulation and testing software integrated directly into the controller that is part of the product for use in testing the product prior to use of the product. As with an ADCS, the product to be tested may comprise one or more actuators and one or more sensors. Any of the optional features of the controller described in the following claims in the context of satellite ADCS may be present in a controller of any product to be tested.

There is also provided here a method of testing apparatus comprising a controller configured to implement one or more processes during normal operation, for example in real time. The method may comprise configuring the controller to implement one or more simulation processes prior to normal operation of the apparatus; implementing the one or more simulation processes prior to normal operation of the apparatus; and commencing normal operation of the apparatus with the controller so configured. No further simulation using the controller is carried out after the normal operation of the apparatus has commenced.

There is also provided here a computer readable medium comprising instructions which, when installed in a product controller, configure the controller to implement one or more processes during normal operation and to implement one or more simulation processes prior to normal operation. The computer readable medium may be in transitory or tangible (or non-transitory) form such as storage media include disks, thumb drives, memory cards etc.

It will be understood that the benefits and advantages described above may relate to one embodiment or may relate to several embodiments. The embodiments are not limited to those that solve any or all of the stated problems or those that have any or all of the stated benefits and advantages.

Any reference to "an" item or "piece" refers to one or more of those items unless otherwise stated. The term "comprising" is used herein to mean including the method steps or elements identified, but that such steps or elements do not comprise an exclusive list and a method or apparatus may contain additional steps or elements.

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

The order of the steps of the methods described herein is exemplary, but the steps may be carried out in any suitable order, or simultaneously where appropriate. Additionally, steps may be added or substituted in, or individual steps may be deleted from any of the methods insofar as this falls under the scope of the claims.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A control system (190) for apparatus to be operated on aircraft or spacecraft, comprising a controller (200) configured to implement one or more real time processes during normal mode when the aircraft or spacecraft is above Earth and to implement one or more simulation processes during simulation mode prior to launch of the aircraft or spacecraft, wherein the control system comprises one or more actuators (211, 212, 213, 221, 222, 223) and one or more sensors (230) operating in a feedback control loop, wherein the controller is configured to operate in either the normal mode or the simulation mode such that:
in the normal mode, an operation is commanded by the controller, the actuators are actuated in response to the command, and sensor signals resulting from the operation are fed back from the sensors to the controller; and
in the simulation mode an operation is commanded by the controller and sensor signals resulting from a simulation of the operation comprise synthetic measurements generated within the controller.

2. The control system of claim 1 wherein the controller comprises a multi-core processor, optionally wherein the controller is configured for the one or more simulation processes to be implemented in one core of the multiple cores of the multi-core processor, and for processes carried out during normal operation to be implemented in another core of the multiple cores of the multi-core processor.

3. The control system of claim 2 wherein the one core and the another core are supported by different operating systems, optionally wherein the one core is supported by a real time operating system and the another core is supported by a non real time operating system and/or wherein the another core is configured to implement one or more telemetry and control handing processes of the controller.

4. The control system of any preceding claim wherein the controller is configured with a model of the aircraft or spacecraft dynamics for use in implementing the one or more simulation processes, optionally wherein the another core of claim 2 is configured with the model of the satellite dynamics.

5. The control system of any preceding claim configured such that:
in the simulation mode, the generation of synthetic measurements is performed in parallel with the control loop; and/or
the cycle of the control loop in simulation mode is the same as the cycle of the control loop in normal mode;
optionally wherein the simulation comprises actuating one or more of the actuators.

6. The control system of any preceding claim wherein the controller is configured such that in the simulation mode the generating of the sensor signals resulting from a simulation of the operation comprises modifying or substituting signals received from the one or more sensors.

7. The control system of any preceding claim comprising a satellite attitude determination and control system "ADCS" wherein the controller is configured to implement the one or more real time processes during normal operation when the satellite is in orbit and to implement the one or more simulation processes prior to launch of the satellite.

8. A satellite comprising the control system according to claim 7, optionally wherein the satellite comprises a synthetic aperture radar "SAR" satellite.

9. The satellite of claim 8 wherein the ADCS is configured for rotating the satellite about an axis parallel to the direction of travel along an orbit.

10. The satellite of claim 8 or claim 9 having a mass less than 1000 kg, optionally wherein the mass is less than 843 kg, less than 500 kg or less than 227 kg.

11. The satellite of any of claims 8 to 10 configured for operation in at altitude of less than 1000 km above Earth.

12. A method of testing operation of a control system (190) for apparatus to be operated on an aircraft or spacecraft, wherein the control system comprises a controller (200) configured to implement one or more real time processes during normal mode when the aircraft or spacecraft is above Earth, the method comprising:
configuring the controller to implement one or more simulation processes during simulation mode prior to launch of the aircraft or spacecraft;
implementing the one or more simulation processes prior to launch of the aircraft or spacecraft; and
launching the aircraft or spacecraft with the controller so configured;
wherein the control system comprises one or more actuators (211, 212, 213, 221, 222, 223) and one or more sensors (230) operating in a feedback control loop, and the method comprises, in the simulation mode, commanding an operation by the controller and generating synthetic sensor measurements within the controller.

13. The method of claim 12 wherein:
in the simulation mode, the generation of synthetic measurements is performed in parallel with the control loop; and/or
the cycle of the control loop in the simulation mode is the same as the cycle of the control loop in normal mode; and/or
the simulation processes and testing of the real time processes are run on a single multi-core processor.

14. The method of claim 12 or claim 13 wherein the simulation processes are run:
in a processing time less than the length of the control system cycle; and/or
in a processing time less than the length of the control system cycle but greater the length of the control system cycle minus the processing time required to run the real time processes to be carried out during normal operation.

15. A computer readable medium comprising instructions which, when installed in the controller of the control system of any of claims 1 to 7, configure the controller to implement the one or more real time processes during the normal mode when the aircraft or spacecraft is above Earth and to implement the one or more simulation processes during the simulation mode prior to launch of the aircraft or spacecraft.

## Patentansprüche

1. Steuerungssystem (190) für eine Einrichtung, die auf einem Luftfahrzeug oder Raumfahrzeug betrieben werden soll, umfassend eine Steuereinheit (200), die so konfiguriert ist, dass sie im normalen Modus, wenn sich das Luftfahrzeug oder Raumfahrzeug über der Erde befindet, einen oder mehrere Echtzeitprozesse implementiert und im Simulationsmodus vor dem Start des Luftfahrzeugs oder Raumfahrzeugs einen oder mehrere Simulationsprozesse implementiert, wobei das Steuerungssystem eine oder mehrere Betätigungsvorrichtungen (211, 212, 213, 221, 222, 223) und einen oder mehrere Sensoren (230) umfasst, die in einem Rückkoppelungsregelkreis arbeiten, wobei die Steuereinheit so konfiguriert ist, dass sie entweder im normalen Modus oder im Simulationsmodus arbeitet, sodass:
im normalen Modus ein Betrieb von der Steuereinheit befohlen wird, die Betätigungsvorrichtungen als Reaktion auf den Befehl betätigt werden und die aus dem Betrieb resultierenden Sensorsignale von den Sensoren an die Steuereinheit zurückgeführt werden; und
im Simulationsmodus ein Betrieb von der Steuereinheit befohlen wird und die aus einer Simulation des Betriebs resultierenden Sensorsignale synthetische Messwerte umfassen, die innerhalb der Steuereinheit erzeugt werden.

2. Steuerungssystem nach Anspruch 1, wobei die Steuereinheit einen Mehrkernprozessor umfasst, wobei die Steuereinheit optional so konfiguriert ist, dass der eine oder die mehreren Simulationsprozesse in einem Kern der mehreren Kerne des Mehrkernprozessors implementiert werden und Prozesse, die während des normalen Betriebs durchgeführt werden, in einem anderen Kern der mehreren Kerne des Mehrkernprozessors implementiert werden.

3. Steuerungssystem nach Anspruch 2, wobei der eine Kern und der andere Kern von unterschiedlichen Betriebssystemen unterstützt werden, optional wobei der eine Kern von einem Echtzeitbetriebssystem unterstützt wird und der andere Kern von einem Nicht-Echtzeitbetriebssystem unterstützt wird und/oder wobei der andere Kern so konfiguriert ist, dass er einen oder mehrere Telemetrie- und Steuerungshandhabungsprozesse der Steuereinheit implementiert.

4. Steuerungssystem nach einem vorstehenden Anspruch, wobei die Steuereinheit mit einem Modell der Flugzeug- oder Raumfahrzeugdynamik zur Verwendung bei der Implementierung des einen oder der mehreren Simulationsprozesse konfiguriert ist, optional wobei der andere Kern nach Anspruch 2 mit dem Modell der Satellitendynamik konfiguriert ist.

5. Steuerungssystem nach einem vorstehenden Anspruch, das so konfiguriert, dass:
im Simulationsmodus die Erzeugung synthetischer Messwerte parallel zum Regelkreis durchgeführt wird; und/oder
der Zyklus des Regelkreises im Simulationsmodus derselbe ist wie der Zyklus des Regelkreises im normalen Modus;
optional wobei die Simulation Betätigen einer oder mehrerer der Betätigungsvorrichtungen umfasst.

6. Steuerungssystem nach einem vorstehenden Anspruch, wobei die Steuereinheit so konfiguriert ist, dass im Simulationsmodus das Erzeugen der aus einer Simulation des Betriebs resultierenden Sensorsignale Modifizieren oder Ersetzen von Signalen umfasst, die von dem einen oder den mehreren Sensoren empfangen werden.

7. Steuerungssystem nach einem vorstehenden Anspruch, umfassend ein Satellitenlagebestimmungs- und -steuerungssystem "ADCS", wobei die Steuereinheit so konfiguriert ist, dass sie während des normalen Betriebs, wenn sich der Satellit in der Umlaufbahn befindet, den einen oder die mehreren Echtzeitprozesse implementiert und vor dem Start des Satelliten den einen oder die mehreren Simulationsprozesse implementiert.

8. Satellit, umfassend das Steuerungssystem nach Anspruch 7, wobei der Satellit optional einen Satelliten mit einem Radar mit synthetischer Apertur "SAR" umfasst.

9. Satellit nach Anspruch 8, wobei das ADCS so konfiguriert ist, dass es den Satelliten um eine Achse dreht, die parallel zur Bewegungsrichtung entlang einer Umlaufbahn verläuft.

10. Satellit nach Anspruch 8 oder Anspruch 9, der eine Masse von weniger als 1000 kg aufweist, optional wobei die Masse weniger als 843 kg, weniger als 500 kg oder weniger als 227 kg beträgt.

11. Satellit nach einem der Ansprüche 8 bis 10, der für den Betrieb in einer Höhe von weniger als 1000 km über der Erde konfiguriert ist.

12. Verfahren zum Testen des Betriebs eines Steuerungssystems (190) für eine Einrichtung, die auf einem Luftfahrzeug oder Raumfahrzeug betrieben werden soll, wobei das Steuerungssystem eine Steuereinheit (200) umfasst, die so konfiguriert ist, dass sie im normalen Modus, wenn sich das Luftfahrzeug oder Raumfahrzeug über der Erde befindet, einen oder mehrere Echtzeitprozesse implementiert, wobei das Verfahren umfasst:
Konfigurieren der Steuereinheit zum Implementieren eines oder mehrerer Simulationsprozesse im Simulationsmodus vor dem Start des Flugzeugs oder Raumfahrzeugs;
Implementieren des einen oder der mehreren Simulationsprozesse vor dem Start des Flugzeugs oder Raumfahrzeugs; und
Starten des Flugzeugs oder Raumfahrzeugs mit der so konfigurierten Steuereinheit;
wobei das Steuerungssystem eine oder mehrere Betätigungsvorrichtungen (211, 212, 213, 221, 222, 223) und einen oder mehrere Sensoren (230) umfasst, die in einem Rückkopplungsregelkreis arbeiten, und das Verfahren im Simulationsmodus Befehlen eines Betriebs durch die Steuereinheit und Erzeugen synthetischer Sensormessungen innerhalb der Steuereinheit umfasst.

13. Verfahren nach Anspruch 12, wobei:
im Simulationsmodus die Erzeugung synthetischer Messwerte parallel zum Regelkreis durchgeführt wird; und/oder
der Zyklus des Regelkreises im Simulationsmodus derselbe ist wie der Zyklus des Regelkreises im normalen Modus; und/oder
die Simulationsprozesse und Testen der Echtzeitprozesse auf einem einzigen Mehrkernprozessor ausgeführt werden.

14. Verfahren nach Anspruch 12 oder Anspruch 13, wobei die Simulationsprozesse ausgeführt werden:
in einer Verarbeitungszeit, die kürzer ist als die Länge des Regelsystemzyklus; und/oder
in einer Verarbeitungszeit, die kürzer ist als die Länge des Regelsystemzyklus, aber länger als die Länge des Regelsystemzyklus abzüglich der Verarbeitungszeit, die für die Ausführung der Echtzeitprozesse während des normalen Betriebs erforderlich ist.

15. Computerlesbares Medium, das Anweisungen umfasst, die, wenn sie in der Steuereinheit des Steuerungssystems nach einem der Ansprüche 1 bis 7 installiert sind, die Steuereinheit so konfigurieren, dass sie im normalen Modus, wenn sich das Flugzeug oder Raumfahrzeug über der Erde befindet, den einen oder die mehreren Echtzeitprozesse implementiert und im Simulationsmodus vor dem Start des Flugzeugs oder Raumfahrzeugs den einen oder die mehreren Simulationsprozesse implementiert.

## Revendications

1. Système de commande (190) pour un appareil destiné à être exploité sur un aéronef ou un engin spatial, comprenant un dispositif de commande (200) configuré pour mettre en œuvre un ou plusieurs processus en temps réel en mode normal lorsque l'aéronef ou l'engin spatial est au-dessus de la Terre, et pour mettre en œuvre un ou plusieurs processus de simulation en mode simulation avant le lancement de l'aéronef ou de l'engin spatial, dans lequel le système de commande comprend un ou plusieurs actionneurs (211, 212, 213, 221, 222, 223) et un ou plusieurs capteurs (230) fonctionnant dans une boucle de commande à rétroaction, dans lequel le dispositif de commande est configuré pour fonctionner soit en mode normal, soit en mode simulation, de sorte que :
en mode normal, une opération est instruite par le dispositif de commande, les actionneurs sont actionnés en réponse à l'instruction, et les signaux de capteur résultant de l'opération sont renvoyés par les capteurs au dispositif de commande ;
en mode simulation, une opération est instruite par le dispositif de commande et les signaux de capteur résultant d'une simulation de l'opération comprennent des mesures synthétiques générées au sein du dispositif de commande.

2. Système de commande selon la revendication 1, dans lequel le dispositif de commande comprend un processeur multicœur, facultativement, dans lequel le dispositif de commande est configuré pour que les un ou plusieurs processus de simulation soient mis en œuvre dans un cœur des multiples cœurs du processeur multicœur, et pour que les processus effectués pendant le fonctionnement normal soient implémentés dans un autre cœur des multiples cœurs du processeur multicœur.

3. Système de commande selon la revendication 2, dans lequel le premier cœur et l'autre cœur sont exécutés par des systèmes d'exploitation différents, facultativement, le premier cœur est exécuté par un système d'exploitation temps réel et l'autre cœur par un système d'exploitation non temps réel et/ou dans lequel l'autre cœur est configuré pour mettre en œuvre un ou plusieurs processus de télémétrie et de gestion des commandes du dispositif de commande.

4. Système de commande selon une quelconque revendication précédente, dans lequel le dispositif de commande est configuré avec un modèle de la dynamique de l'aéronef ou de l'engin spatial pour être utilisé dans la mise en œuvre des un ou plusieurs processus de simulation, facultativement dans lequel l'autre cœur selon la revendication 2 est configuré avec le modèle de la dynamique satellite.

5. Système de commande selon une quelconque revendication précédente configuré de telle sorte que :
en mode simulation, la génération de mesures synthétiques est effectuée en parallèle avec la boucle de commande ; et/ou
le cycle de la boucle de commande en mode simulation est identique au cycle de la boucle de commande en mode normal ;
facultativement dans lequel la simulation comprend l'actionnement d'un ou plusieurs des actionneurs.

6. Système de commande selon une quelconque revendication précédente, dans lequel le dispositif de commande est configuré de telle sorte qu'en mode simulation, la génération des signaux de capteur résultant d'une simulation de l'opération comprend la modification ou la substitution des signaux reçus des un ou plusieurs capteurs.

7. Système de commande selon une quelconque revendication précédente comprenant un système de détermination et de commande d'attitude de satellite « ADCS » dans lequel le dispositif de commande est configuré pour mettre en œuvre les un ou plusieurs processus en temps réel pendant le fonctionnement normal lorsque le satellite est en orbite et pour mettre en œuvre les un ou plusieurs processus de simulation avant le lancement du satellite.

8. Satellite comprenant le système de commande selon la revendication 7, facultativement dans lequel le satellite comprend un satellite radar à synthèse d'ouverture « SAR ».

9. Satellite selon la revendication 8, dans lequel l'ADCS est configuré pour faire tourner le satellite autour d'un axe parallèle à la direction de déplacement le long d'une orbite.

10. Satellite selon la revendication 8 ou la revendication 9 présentant une masse inférieure à 1000 kg, facultativement dans lequel la masse est inférieure à 843 kg, inférieure à 500 kg ou inférieure à 227 kg.

11. Satellite selon l'une quelconque des revendications 8 à 10 configuré pour fonctionner à une altitude inférieure à 1000 km au-dessus de la Terre.

12. Procédé d'essai du fonctionnement d'un système de commande (190) destiné à un appareil destiné à être exploité sur un aéronef ou un engin spatial, dans lequel le système de commande comprend un dispositif de commande (200) configuré pour mettre en œuvre un ou plusieurs processus en temps réel en mode normal lorsque l'aéronef ou l'engin spatial se trouve au-dessus de la Terre, le procédé comprenant :
la configuration du dispositif de commande pour mettre en œuvre un ou plusieurs processus de simulation en mode simulation avant le lancement de l'aéronef ou de l'engin spatial ;
la mise en œuvre des un ou plusieurs processus de simulation avant le lancement de l'aéronef ou de l'engin spatial ; et
le lancement de l'aéronef ou de l'engin spatial avec le dispositif de commande ainsi configuré ;
dans lequel le système de commande comprend un ou plusieurs actionneurs (211, 212, 213, 221, 222, 223) et un ou plusieurs capteurs (230) fonctionnant dans une boucle de commande de rétroaction, et le procédé comprend, en mode simulation, l'instruction d'une opération par le dispositif de commande et la génération de mesures de capteurs synthétiques au sein du dispositif de commande.

13. Procédé selon la revendication 12, dans lequel :
en mode simulation, la génération de mesures synthétiques est effectuée en parallèle avec la boucle de commande ; et/ou
le cycle de la boucle de commande en mode simulation est identique au cycle de la boucle de commande en mode normal ; et/ou
les processus de simulation et les tests des processus en temps réel sont exécutés sur un processeur multicœur unique.

14. Procédé selon la revendication 12 ou la revendication 13, dans lequel les processus de simulation sont exécutés :
dans un temps de traitement inférieur à la durée du cycle du système de commande ; et/ou
dans un temps de traitement inférieur à la durée du cycle du système de commande, mais supérieur à la durée du cycle du système de commande moins le temps de traitement nécessaire à l'exécution des processus en temps réel à réaliser en fonctionnement normal.

15. Support lisible par ordinateur comprenant des instructions qui, lorsqu'elles sont installées dans le dispositif de commande du système de commande selon l'une quelconque des revendications 1 à 7, configurent le dispositif de commande pour mettre en œuvre les un ou plusieurs processus en temps réel en mode normal lorsque l'aéronef ou l'engin spatial est au-dessus de la Terre et pour mettre en œuvre les un ou plusieurs processus de simulation en mode simulation avant le lancement de l'aéronef ou de l'engin spatial.
